# EUROPEAN PATENT APPLICATION

(11) **EP 0 523 333 A1**
(43) Date of publication of application: **20.01.1993**
(21) Application number: 92107519.8
(22) Date of filing: 04.05.1992
(51) Int. Cl.: C12C 7/04, C12G 3/02, C12C 11/04

(54) **Method for producing non-alcoholic beverage and low alcohol beer**

(30) Priority: 17.07.1991 JP 201209/91; 17.07.1991 JP 201210/91
(71) Applicant: SAPPORO BREWERIES, LTD., Tokyo 104 (JP)
(72) Inventor: Sekibata, Satoshi, c/o Sapporo Breweries Limited, Yaizu-shi, Shizuoka-ken (JP); Sekine, Takatoshi, c/o Sapporo Breweries Limited, Yaizu-shi, Shizuoka-ken (JP); Murakami, Jun, c/o Sapporo Breweries Limited, Yaizu-shi, Shizuoka-ken (JP)
(74) Representative: Türk, Gille, Hrabal, Leifert

(57) **Abstract**

Non-alcohol beverage and low alcohol beer are provided economically and efficiently merely by incorporating α-glucosidase during a mashing process in a conventional method for producing beer. The alcohol content can be easily controlled to a desired degree depending upon the amount of α-glucosidase incorporated, but the taste, flavor, deliciousness and good body inherently possessed by beer are retained in the non-alcohol beverage and low alcohol beer.

## Description

### BACKGROUND OF THE INVENTION

### FIELD OF THE INVENTION

The present invention relates to a method for preparing non-alcohol beverage and low alcohol beer and more particularly, to a method for preparing non-alcohol beverage and low alcohol beer characterized by adding α-glucosidase to a mash at a mashing process of producing beer.

### STATEMENT OF THE PRIOR ART

In the present invention, the term "non-alcohol beverage" refers to a beverage having an alcohol content of less than 0.5% and the term "low alcohol beer" refers to beer having an alcohol content of 0.5 to 4.0%.

The non-alcohol beverage having an alcohol content of less than 0.5% is prepared by various methods. There are, for example, a method for suppressing fermentation of fermentable sugars as less as possible during the production process, a method for retarding alcohol formation utilizing a special yeast, a method in which the alcohol content is reduced to less than 0.5% by distillation after the preparation of an alcohol beverage, a method for treating an alcohol beverage using an asymmetric reverse osmotic membrane to reduce the alcohol content to less than 0.5, and the like.

However, these methods require special facilities, equipments, etc. for remove alcohol and result in increasing running costs. In addition, these methods might sometimes cause change in taste or flavor. Therefore, the prior art method are not satisfactory. Furthermore, non-alcohol fermented beverages are fatally defective in that they taste watery and are not satisfactory in delicious or rich taste. As such, under the actual situation, any method for efficiently preparing non-alcohol beverages which satisfy both costs and quality has not yet been established.

In recent years, the sales of alcoholic drinks such as whisky, Shochu or low-class distilled spirits, etc. which have a high alcohol content are going down; on the other hand, the sales of low alcoholic drinks such as beer, wine, liqueur, etc. are increasing. As is seen from this trend, the alcohol content in alcoholic drinks has been low. In the future, it is expected that low alcoholic drinks would be more pleased. Among them, beer which is a representative of low alcoholic drinks would expand its market, as has been done in Europe and America.

Ordinary beer has an alcohol content of 4.5 to 5.0% and possesses a suitable taste and good body. However, some people are prohibited to have a beer because of disease or for other reasons. For such people, low alcohol beer has been provided. For rendering the alcohol content of beer low, there are known a method for distillation to remove the alcohol from beer, a method for dialysis, a method for suppressing fermentation as less as possible, a method using an asymmetric reverse osmotic membrane (Japanese Unexamined Published Patent Application No. 50-29795), etc.

However, the method for distillation requires expensive devices and causes loss in energy. In addition, the necessity of treating at high temperature results in denaturation of protein or change in substances which would affect taste and flavor so that satisfactory flavor is not obtained.

In the method for dialysis, diffusion of alcohol is a driving force so that the efficiency of substance exchange is affected by concentration slope of alcohol. Therefore, it takes a very long period of time for the treatment so that the method is defective in poor efficiency. Moreover, in order to remove alcohol, it is necessary to treat using a dialysis membrane and upon the dialysis, low molecular substances which are a part of the extract are lost through the membrane. In order to prevent permeation of the extract through the membrane, it is thus required to incorporate the extract into the dialysate in a suitable concentration.

In the method for suppressing fermentation as less as possible, fermentation becomes insufficient so that many sugars remain and the thus obtained beer is insufficiently matured, resulting in noticeable flavor of wort but insufficient flavor as beer.

In the method using an asymmetric reverse osmotic membrane, a pressure as high as 30 to 50 kg/cm² and expensive facilities are required for operation which cause high running costs. In addition, the components contained in beer might be denatured due to the high pressure, which is an adverse effect involved in the method. As stated above, any method for efficiently and economically preparing a low alcohol beer having good quality has not been established yet under the present situation.

### SUMMARY OF THE INVENTION

The present inventor has made extensive investigations to solve the foregoing problem and develop a method for efficiently and economically preparing a non-alcohol beer or low alcohol beer having good quality. As a result, it has been found that when α-glucosidase is used during the steps of preparing beer, especially at a mashing process, fermentable sugars in wort can be converted into non-fermentable sugars and the amount of alcohol formed can be reduced. The present invention has thus been accomplished.

That is, the present invention provides a method for preparing non-alcohol beer or low alcohol beer characterized by adding α-glucosidase to a mash at a mashing process of producing beer.

### DETAILED DESCRIPTION OF THE PREFERRED EMBODIMENTS

The non-alcohol beverage or low alcohol beer of the present invention can be obtained by incorporating α-glucosidase at a mashing process in ordinary beer production.

As the α-glucosidase, the one of various sources can be freely used. Commercially available α-glucosidase may also be used. The shape may be any of liquid, powder, α-glucosidase immobilized on a carrier, etc. The timing of incorporating α-glucosidase is not particularly limited but it is required to incorporate α-glucosidase into the saccharifying mash having a mash extract concentration of 4.5 to 10% at the mashing process before fermentation. Where the mash extract concentration is less than 4.5%, flavor becomes simple or plain and such is not preferred. On the other hand, where the mash extract concentration exceeds 10%, the content of non-fermentable extract becomes high so that the smell and taste of wort is appreciable and such is not preferred.

As described above, the fermentable sugars in the wort are converted into non-fermentable sugars by incorporating α-glucosidase into the saccharifying mash at a mashing process before fermentation. More specifically, glucose, fructose, sucrose, maltose, maltotriose, etc. are converted into kojibiose, nigerose, isomaltose, erlose, panose, isomaltotriose, etc. Therefore, these non-fermentable sugars are not utilized for the fermentation so that the amount of alcohol to be formed is reduced. In addition, simpleness, plainness, insufficient tasty taste, insufficient rich taste, etc. which are disadvantages involved in non-alcohol beverages or low alcohol beer are eliminated and instead, a tasty rich taste can be imparted to the non-alcohol beverage or low alcohol beer, as in ordinary beer.

The amount of α-glucosidase incorporated is determined, taking into account the concentration of fermentable sugar in mash before fermentation but 300 ml (100,000,000 units), preferably about 360 ml (120,000,000 units) per kiloliter, is generally appropriate. The alcohol concentration in the product may also be varied by varying the amount of α-glucosidase incorporated, depending upon purpose; also in this case, it is necessary to incorporate 240 ml (80,000,000 units) per kiloliter. The α-glucosidase may be added to wort before fermentation at once or may also be added in several portions.

According to the present invention, protease, α-amylase, β-amylase, purlanase, etc. may also be incorporated singly or in combination, together with the α-glucosidase, whereby non-alcohol beverages or low alcohol beer having a higher quality can be produced.

As stated above, the non-alcohol beverage or low alcohol beer of the present invention is obtained by incorporating α-glucosidase at a mashing process in a conventional method for producing beer. No facilities such as a special plant, etc. are required. The method of the present invention is free of any problems such as loss in energy, poor efficiency, difficulty in setting conditions, denaturation of ingredients due to heat or pressure, etc. which are involved in conventional methods. In preparing the non-alcohol beverage or low alcohol beer of the present invention, any special conditions are not required at all, except for incorporating α-glucosidase at a mashing process and any facilities such as a special plant, etc., or any special operations are not required. Therefore, running costs required for the method of the present invention are almost the same as in those of the conventional methods. In addition, transglycosylation by α-glucosidase proceeds rapidly so that there is no waste of time.

### EXAMPLES

Next, the present invention is described by referring to the examples below.

### Example 1

Using a brewing facility (about 500 liter volume) of pilot scale, 150 ml (about 50,000,000 units) of α-glucosidase was incorporated in mash of 10.9% original extract during a mashing process and non-alcohol beverage was prepared in a conventional manner. On the other hand, for the purpose of comparison, non-alcohol beverage was produced in a conventional manner without adding α-glucosidase. The analytical results of both methods are shown in Table 1.

**Table 1**

| | Comparative Product | Product of This Invention |
|---|---|---|
| Original extract (%) | 10.9 | 10.9 |
| Real extract (%) | 3.2 | 6.3 |
| Real attenuation degree (%) | 70.4 | 42.0 |
| Alcohol (v/v %) | 5.0 | 3.0 |
| pH | 4.4 | 4.6 |

### Example 2

Low alcohol beer was produced in a manner similar to Example 1, except for using mash of 9.5% original extract. The results are shown in Table 2.

**Table 2**

| | Comparative Product | Product of This Invention |
|---|---|---|
| Original extract (%) | 9.5 | 9.5 |
| Real extract (%) | 3.1 | 5.9 |
| Real attenuation degree (%) | 67.4 | 37.9 |
| Alcohol (v/v %) | 4.1 | 2.4 |
| pH | 4.8 | 4.8 |

### Example 3

Using a small-sized device for saccharification (about 500 liter volume), 0.3 ml (about 100,000 units) of α-glucosidase was incorporated in mash of 11% original extract during a mashing process and low alcohol beer was prepared in a conventional manner. On the other hand, for the purpose of comparison, low alcohol beer was prepared in a conventional manner without adding α-glucosidase. The analytical results of both methods are shown in Table 3.

**Table 3**

| | Comparative Product | Product of This Invention |
|---|---|---|
| Original extract (%) | 11.0 | 11.0 |
| Real extract (%) | 3.2 | 6.8 |
| Real attenuation degree (%) | 70.9 | 38.2 |
| Alcohol (v/v %) | 4.9 | 2.7 |
| pH | 4.7 | 4.6 |

### Example 4

Using a beer fermentation facility (about 500 liter volume) of pilot scale, 400 liters of mash was prepared in original extract of 5.5% in a conventional manner for preparing beer. Then, 150 ml (about 50,000,000 units) of α-glucosidase was incorporated in the mash and then non-alcohol beverage was prepared in a conventional manner. On the other hand, for the purpose of comparison, non-alcohol beverage was prepared by suppression type low temperature pressure contact method, without adding α-glucosidase. The analytical results of both methods are shown in Table 4.

**Table 4**

| | Comparative Product | Product of This Invention |
|---|---|---|
| Original extract (%) | 5.5 | 5.5 |
| Real extract (%) | 4.2 | 4.9 |
| Real attenuation degree (%) | 23.6 | 10.9 |
| Alcohol (v/v %) | 0.81 | 0.42 |
| pH | 4.5 | 4.7 |

### Example 5

Non-alcohol beverage was prepared in a manner similar to Example 4, except for using mash of 5.0% original extract. The results are shown in Table 5.

**Table 5**

| | Comparative Product | Product of This Invention |
|---|---|---|
| Original extract (%) | 5.0 | 5.0 |
| Real extract (%) | 3.7 | 4.4 |
| Real attenuation degree (%) | 26.0 | 12.0 |
| Alcohol (v/v %) | 0.84 | 0.40 |
| pH | 4.7 | 4.7 |

### Example 6

Using a small-sized device for saccharification (about 500 liter volume), 0.3 ml (about 100,000 units) of α-glucosidase was incorporated in mash during mashing process and non-alcohol beverage was prepared in a conventional manner. On the other hand, for the purpose of comparison, non-alcohol beverage was prepared in a conventional manner without adding α-glucosidase. The analytical results of both methods are shown in Table 6.

**Table 6**

| | Comparative Product | Product of This Invention |
|---|---|---|
| Original extract (%) | 5.5 | 5.5 |
| Real extract (%) | 4.3 | 4.8 |
| Real attenuation degree (%) | 21.8 | 12.7 |
| Alcohol (v/v %) | 0.80 | 0.45 |
| pH | 4.7 | 4.6 |

According to the present invention, non-alcohol beverage and low alcohol beer can be prepared economically and efficiently simply by incorporating α-glucosidase during mashing process in a conventional method for producing beer. In addition, the alcohol content can be easily controlled to a desired degree depending upon the amount of α-glucosidase incorporated, in the non-alcohol beverage and low alcohol beer obtained by the present invention and such non-alcohol beverage and low alcohol beer retains the taste, flavor, deliciousness and good body inherently possessed by beer. Therefore, according to the present invention, the existing beer market can be expanded to a new genre and can be activated. Furthermore in the product obtained by the present invention, isomalto-oligosaccharides are contained and they have an effect as adsorbents.

While the invention has been described in detail and with reference to specific embodiments thereof, it is apparent to one skilled in the art that various changes and modifications can be made therein without departing from the spirit and the scope of the present invention.

## Claims

1. A method for preparing non-alcohol beverage characterized by adding α-glucosidase to a beverage at a mashing process of producing beer.

2. A method as claimed in claim 1, wherein a proportion of malt used is in the range of 1.0 to 100%.

3. A method for preparing low alcohol beer characterized by adding α-glucosidase to beer during a mashing process of producing beer.

4. A method as claimed in claim 3, wherein a proportion of malt used is in the range of 66.7 to 100%.
